# EUROPEAN PATENT SPECIFICATION

(11) **EP 0 510 131 B1**
(45) Date of publication and mention of the grant of the patent: **05.09.2001**
(21) Application number: 91917943.2
(22) Date of filing: 09.10.1991
(51) Int. Cl.: G08G 1/16

(54) **ELECTRONIC EQUIPEMENT FOR PREVENTION OF COLLISIONS BETWEEN VEHICLES**
ELEKTRONISCHE VORRICHTUNG ZUR VERMEIDUNG VON ZUSAMMENSTÖSSEN ZWISCHEN FAHRZEUGEN
MATERIEL ELECTRONIQUE PERMETTANT D'EVITER LES COLLISIONS ENTRE VEHICULES

(30) Priority: 07.11.1990 IT 4845390
(43) Date of publication of application: 28.10.1992
(73) Proprietor: CAICO, Giovanni, I-74020 Lama (IT)
(72) Inventor: CAICO, Giovanni, I-74020 Lama (IT)
(74) Representative: Baldi, Claudio
(86) International application number: IT9100084
(87) International publication number: WO9209060

(56) References cited:
- EP-A- 0 055 227
- GB-A- 1 373 534
- US-A- 3 892 483
- US-A- 3 949 362
- US-A- 4 403 208
- IEEE TRANSACTIONS ON VEHICLE TECHNOLOGY vol. VT-27, no. 1, February 1978, NEW YORK, US pages 31 - 34; HADEN: 'A student-designed automotive collision avoidance system' see the whole document

## Description

### Technical Field:

My invention relates to an electronic equipment composed of microelectronic devices for vehicles and motorcycles which are able to prevent both first and subsequent collisions, providing immediate information of the imminent danger, at a short distance.

This equipment is composed of many electronic components with different functions, placed and welded on a circuit board arranged inside a hard case, whose base plate is made of hard epoxy glass resin fibre, containing the relative wiring for printing circuit board in order to guaranty the maximum safety in case of impact between vehicles, a front panel with LE.D. displays and devices for audio-signals.

Patent US-A-4403208 describes a system designed to signal to a first vehicle the presence of a second vehicle to keep under control; the activation of this system requires the installation of a transmitter on the second vehicle and of a receiver on the first vehicle.

This system is activated manually by the operator.

The system therefore does not imply an accident prevention action either for car drivers in proximity of the first vehicle and of the second vehicle or for the two vehicles themselves.

The article by HADEN from IEEE TRANSACTIONS ON VEHICLE TECHNOLOGY describes a system designed to signal but not to prevent road accidents.

This system in fact provides the installation on board a car/cars of a transmitter - receiver apparatus whose activation is automatic thanks to the use of impact sensors that are activated only after collision.

Patent GB-A-1373534 describes a system designed to provide a chain of radio bridges that re-transmit a situation of danger for the entire length of the road, monitored by this system which in fact requires the installation of transmitter - receiver apparatus' both on the vehicles and at fixed stations.

The main purpose of this invention is to realise a system to transmit an alarm signal to a plurality of vehicles and at the same time provide information of the distance between the vehicle receiving the alarm signal and the vehicle by which the alarm is transmitted.

Said purpose is reached by means of an electronic equipment according to claim 1. The equipment in question relates to *an early detection and collision avoidance system for providing communication between a first vehicle and a plurality of vehicles comprising:*
- *at least one impact sensor* ***(section 1)*** *mounted on the first vehicle which detects an impact between the first vehicle and an object, said at least one impact sensor producing an impact signal thereto;*
- *an alarm signal generator* ***(section 3)*** *mounted on the vehicle and connected to said al least one impact sensor for generating an alarm signal in response to the impact signal produced by the impact sensor; and*
- *a transmitter* ***(part 2 of section 3)*** *mounted on the first vehicle and connected to the alarm signal generator for transmitting a transmitter alarm signal in response to receiving said alarm signal generated by the alarm signal generator* ***(section 3),*** *said transmitter alarm signal being transmitted to the plurality* of *vehicles; wherein each respective vehicle of the plurality of vehicles includes:*
- *a receiver* ***(section 4)*** *for receiving the transmitter alarm signal generated by the transmitter* ***(part 2 of section 3)***
- *a proximity detector* ***(section 1)*** *connected to the receiver for determining the distance between the first vehicle and the plurality of vehicles*.

*All the components comprised in the aforementioned electronic equipment are described here below.*

### Disclosure parts of the invention:

Each electronic device is composed of an encoding transmitter and a decoding receiver.
A) The encoding transmitter is used to transmit alarm signals in case of vehicle self collision or collision with another vehicle.
   Thanks to a series of sensors, which are activated in case of collision between two vehicles, said encoding transmitter automatically sends an encoded radio signal at a distance of about 3.000 - 5,000 meters.
   The sensors together with the encoding parts of the transmitter features the alarm signal generator (encoder - **part 1 of section 3).**
   This operation can be done manually, in case of emergency.
B) The decoding receiver is activated automatically as soon as the driver inserts the key to start the vehicle.
   This device always remains in receiving mode during the driving time; it automatically sends the alarm signal when an accident happens in the vehicle area and, in the meantime, the decoding receiver discriminates the signals received and sends them in the form of audio signals **(section 5)** to the loud speaker and to the display, activating green, yellow and red colour L.E.D **(section 6),** depending on the distance:
   - green LE.D = from 5.000 to 3.000 meters;
   - yellow L.E.D. = from 3.000 to 500 meters;
   - red L.E.D: from 500 up to the point where the collision occurred.

   This alarm signal, when sent to all the vehicles which are in the area concerned, is very useful to the drivers since it informs them that an accident has happened nearby, even though it is not visible yet.
C) Alarm System to keep safety distance between vehicles.
   By means of the encoding transmitter (item A), the decoding receiver (item B) and the infrared or microwave sensors the equipment will be able to alert the driver - in case of poor visibility, rain, fog and tunnel - when the security distance between his vehicle and the preceding one is becoming minimum.
   This alert signal **(part 3 of section 3)** will be generated by means of audio speakers and displays located both inside and outside the vehicle; said alarm will be excluded manually when driving in town and automatically while overtaking.
D) Automatic slow down of the vehicle The items A), B) and C) make the automatic braking of the vehicle possible by means of proper hydraulic interfaces which block the hydraulic system once the minimum safety distance between two vehicles is reached and the related alert signal is received.

But, if the driver is proceeding toward the collision area (ex. he is at a distance of about 300 meters from the collision point) and he has not seen any accident yet due to the lack of visibility, those few seconds may be vital both for whom is coming and for whom is involved in the first collision.

Obviously, if a vehicle is coming from the opposite direction, in a few seconds the L.E.D display will inform the driver of the collision; once the accident area has been overcome the colour of the signal will change into another one, and finally any colour will disappear from the display.

### Proximity Alarm Device

The equipment described at point A and B is manually operated and allows the encoding transmitter to send signals in the form of radio waves to the decoding receiver of another vehicle at a distance of 200 meters, also providing an audio and visual signal (yellow and red L.E.D.) indicating the proximity to the collision point.

One of the main advantages resulting from said function is to provide an early information in case of poor visibility and off-position of the traffic lights.

### Electronic hom

This hom is composed of a push-bottom device that operates the encoding transmitter sending a radio signal to the decoding receiver of the other vehicle in the form of both audio signal and light signal of blue colour.

The advantage obtained by this invention is to substitute the old hom system.

### Encoding transmitter

The encoding transmitter provides radio frequency signals in order to avoid interfaces and false alarms.

Said encoding part of the device is based on two integrated circuits (IC) here used in order to operate the sensors.

This encoding transmitter is composed of the following three blocks:
1° = Oscillator of low frequency;
2° = Encoder **(part 1 of section 3);**
3° = Discriminator.

The oscillator of low frequency is used, here, to obtain a square wave signal in which the frequency is determined by the value of the resistance, R8 and R9 and by the condenser C3, at the points where they are connected with pin n. 11, 12 and 13 of the encoding transmitter as shown in the diagrams.

Note that the values of the resistances and the condenser give the variable working frequency of this transmitter.

The output of the encoder **(part 1 of section 3)** is performed at pin n. 15 where a series of pulses occurs.

The key is made up by a series of small and large pulses, which are decoded by the receiver.

### Decoding Receiver

This receiver is composed of four main blocks:
1° = Discriminator;
2° = Comparator;
3° = Decoder,
4° = Output stage.

The decoder is used in order to decode the encoded message contained in the transmitted signals and send it to the visual and audio interfaces.

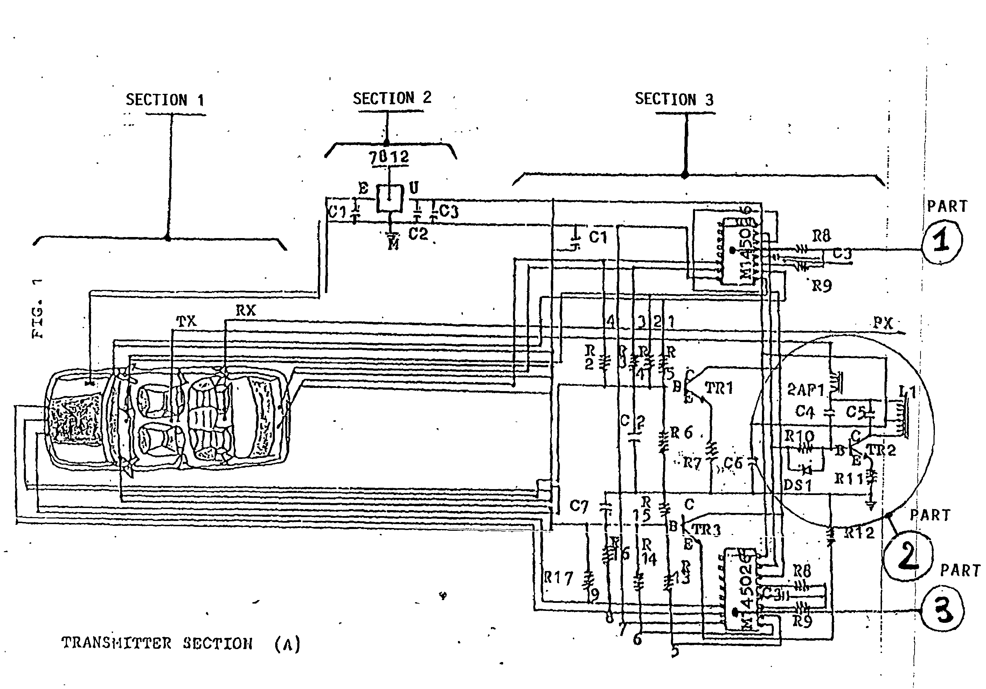

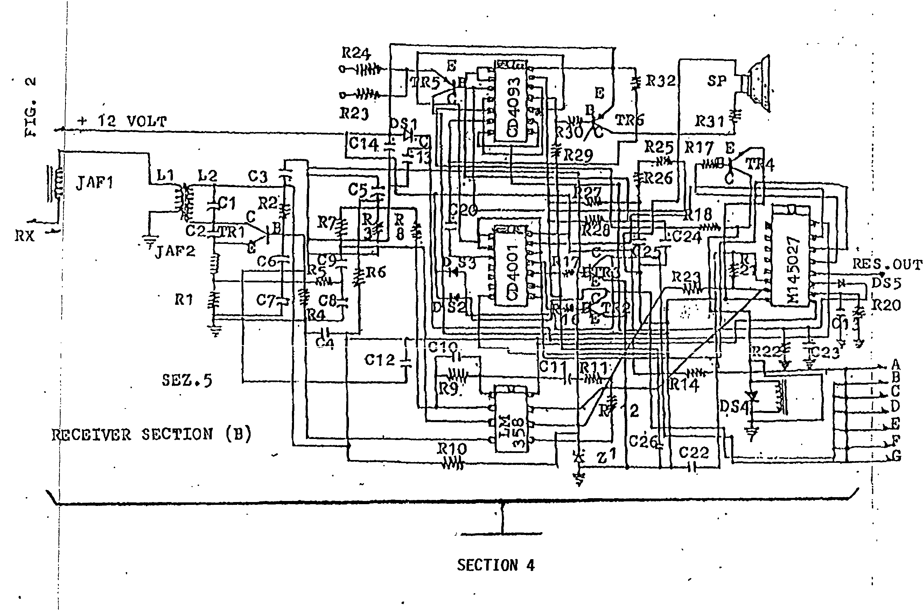

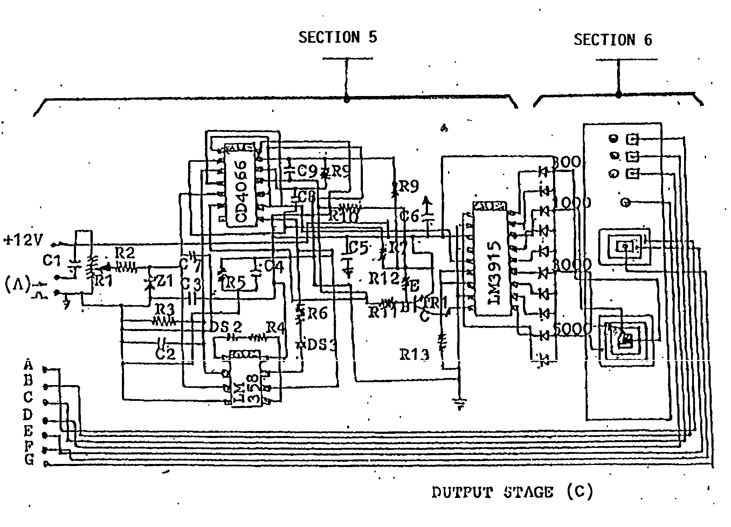

The fig. n. 1, 2 and n. 3 show the electronic schematics:
The **section 1** of fig. 1 indicates the position of all the sensors, photocells and antennas; figures 1 and 2 also show that the collision sensors are set up for minimum 30 km per hour/speed.
The **section 2** consists of the voltage regulator.
The **section 3** shows the encoding transmitter which is composed of integrated circuits (as previously described on page 4, lines 10 - 27).
The **section 4** shows the decoding receiver which is composed of an integrated circuit M - 145027 together with CD - 4001 and CD 4093 (as described on page 4, lines 28-32 and page 5, lines 1-3).
The **section 5** shows the visualisation management unit which is composed of LM-3915, CD- 4066 and LM 358. The **section 6** shows the audio and visual interfaces of the driver placed on the dash-board and composed of acoustic signal functions in the form of miniature loud-speakers, buzzers and L.E.D. emitting dials.

## Claims

1. An early detection and collision avoidance system for providing communication between a first vehicle and a plurality of vehicles comprising:
at least one impact sensor **(section 1)** mounted on the first vehicle which detects an impact between the first vehicle and an object, said at least one impact sensor producing an impact signal in response thereto;
an alarm signal generator **(section 3)** mounted on the first vehicle and connected to said at least one impact sensor for generating an alarm signal in response to the impact signal produced by the impact sensor; and
a transmitter **(part 2 of section 3)** mounted on the first vehicle and connected to the alarm signal generator for transmitting a transmitter alarm signal in response to receiving said alarm signal generated by the alarm signal generator, said transmitter alarm signal being transmitted to the plurality of vehicles;
wherein each respective vehicle of the plurality of vehicles includes:
a receiver **(section 4)** for receiving the transmitter alarm signal generated by the transmitter; and
a proximity detector **(section 1)** connected to the receiver for determining the distance between the first vehicle and the plurality of vehicles.

2. The system according to claim 1, further comprising an encoder **(part 1 of section 3)** connected between the alarm signal generator and the transmitter for encoding the transmitter alarm signal prior to transmission.

3. The system according to claim 1, wherein each respective vehicle of the plurality of vehicles includes a respective signal generator, each signal generator generating a second alarm signal **(part 3 of section 3)** if the proximity detected by the proximity detector is below a predetermined value.

4. The system according to claim 3, the proximity detector **(section1)** further comprising:
lateral sensing means **(section 1)** for detecting the proximity of objects lateral to the vehicle; and
longitudinal sensing **(section 1)** means for detecting the proximity of objects longitudinal to the vehicle.

5. The system according to claim 1, further comprising automatic activation means **(section 1)** for activating the impact sensor and the proximity detector in response to limited visibility about the vehicle.

6. The system according the claim 1, further comprising means connected to the alarm signal generator for generating a visual signal **(section 5)** in response to the alarm signal generated by the alarm signal generator.

7. The system according to claim 6, wherein the means for generating a visual signal includes a plurality of color coded lights disposed within the interior of the vehicle **(section 6).**

8. The system according to claim 6, wherein the means for generating a visual signal **(section 6)** includes a first plurality of lights disposed about the exterior periphery of the vehicle and a second plurality of lights disposed about the signal generator **(section 3),** said first and second plurality of lights activated when the proximity detector **(section 1)** detects a predetermined distance.

9. The mechanism according to claim 1, further comprising means connected to the alarm signal generator for generating an audible signal **(section 4)** in response to the alarm signal generated by the alarm signal generator **(section 3).**

10. The system according to claim 1, wherein the vehicle includes brakes **(section 1)** for reducing the velocity of the vehicle, said system further comprising brake activation means **(section 3)** for activating the brakes of the vehicle in response to the alarm signal emitted by the impact sensor **(section 1).**

11. The system according to claim 1, wherein the each respective vehicle includes bright driving lights and regular driving lights **(section 1),** and further including:
light detection means **(section 3)** for detecting bright light emitted from the oncoming vehicle and emitting a light detection signal in response thereto to the oncoming vehicle; and
bright light reduction means **(section 3)** for reducing the intensity of the bright driving lights in response to the light detection signal emitted from the light detection means of the oncoming vehicle.

12. The system according to claim 1, further comprising a manually operated horn signaling device **(section 1),** wherein the alarm signal generator **(section 3)** generates an encoded radio signal in response to a hom signal of the manually operated horn signaling device and the transmitter of the first vehicle **(part 2 of section 3)** transmits the encoded radio signal generated by the signal generator **(section 3)** to the receiver **(section 4)** of the each respective vehicle which is within a predetermined distance.

13. The system according to claim 12, wherein the receiver (section 4) of the each respective vehicle receives the encoded signal generated by the manually operated hom signaling device **(section 1)** of the first vehicle, and further comprising means for emitting a hom distress signal interior of the each respective vehicle in response thereto.

## Patentansprüche

1. Abgreifsystem zur Verhütung und Vermeidung von Kollisionen, welches in der Lage ist, ein erstes Fahrzeug mit einer Vielzahl von anderen Fahrzeugen in Verbindung zu setzen, bestehend aus:
mindestens einem Aufprallsensor (Sektion 1), der im ersten Fahrzeug installiert ist und einen Aufprall zwischen dem ersten Fahrzeug und einem Gegenstand abgreift, wobei der besagte Aufprallsensor (mindestens einer) in der Lage ist, durch Aussenden eines Aufprallsignals zu antworten;
einem Alarmsignalgenerator (Sektion 3), der im ersten Fahrzeug installiert und an den besagten Aufprallsensor (mindestens einer) angeschlossen ist, um ein Alarmsignal als Reaktion auf das vom Aufprallsensor ausgesandte Aufprallsignal zu erzeugen; und
einem Sender (Teil 2 der Sektion 3), der im ersten Fahrzeug installiert und mit dem Alarmsignalgenerator verbunden ist zur Übertragung des Alarmsignals des Senders als Reaktion auf das besagte, vom Alarmsignalgenerator erzeugte Alarmsignal, wobei vorgesehen ist, dass das besagte Alarmsignal des Senders an eine Vielzahl von Fahrzeugen übertragen wird;
wobei zu berücksichtigen ist, dass jedes dieser Fahrzeuge folgendes umfasst:
einen Empfänger (Sektion 4), der in der Lage ist, das vom Sender erzeugte Alarmsignal zu empfangen;
einen Proximitätsermittler (Sektion 1), der mit dem Empfänger verbunden ist und dazu in der Lage ist, den Abstand zwischen dem ersten Fahrzeug und der Vielzahl der anderen Fahrzeuge zu bestimmen.

2. Das System gemäß Anspruch 1 umfasst außerdem eine Codiereinrichtung (Teil 1 von Sektion 3), die zwischen dem Alarmsignalgenerator und dem Sender angeschlossen ist, um das Alarmsignal des Senders vor der Übertragung zu codieren.

3. System gemäß Anspruch 1, in welchem jedes zur Vielzahl der Fahrzeuge gehörende Fahrzeug einen Signalgenerator umfasst und jeder Signalgenerator ein zweites Alarmsignal aussendet (Teil 3 von Sektion 3), falls der vom Proximitätsermittler ermittelte Abstand unterhalb eines festgelegten Wertes liegt.

4. Im System gemäß Anspruch 3 umfasst der Proximitätsermittler (Sektion 1) auch:
seitliche Sensoren (Sektion 1) zur Ermittlung der Nähe von Gegenständen, die sich seitlich vom Fahrzeug befinden und
longitudinale Sensoren (Sektion 1) zur Ermittlung der Nähe von Gegenständen, die sich längs des Fahrzeugs befinden

5. Das System gemäß Anspruch 1 umfasst außerdem automatische Betätigungsmittel, die in der Lage sind, die Aufprallsensoren und den Proximitätsermittler bei eingeschränkten Sichtverhältnissen in der Nähe des Fahrzeugs zu aktivieren.

6. Das System gemäß Anspruch 1 umfasst außerdem Mittel, die an den Alarmsignalgenerator angeschlossen sind zwecks Erzeugung eines optischen Signals (Sektion 5) als Reaktion auf das vom Alarmsignalgenerator erzeugte Alarmsignal.

7. System gemäß Anspruch 6, in welchem die Mittel zur Erzeugung eines optischen Signals eine Vielzahl von farbcodierten Lichtern beinhalten, die im Innern des Fahrzeugs (Sektion 6) untergebracht sind.

8. System gemäß Anspruch 6, in welchem die Mittel zur Erzeugung eines optischen Signals (Sektion 6) eine Vielzahl von im äußeren Peripherbereich des Fahrzeugs untergebrachten Lichtern sowie eine zweite Vielzahl von in der Nähe des Signalgenerators (Sektion 3) untergebrachten Lichtern beinhaltet, wobei vorgesehen ist, dass die erste und die zweite Vielzahl von Lichtern eingeschaltet werden, wenn der Proximitätsermittler (Sektion 1) einen zuvor festgelegten Abstand ermittelt.

9. Der Mechanismus gemäß Anspruch 1 umfasst außerdem Mittel, die an den Alarmsignalgenerator angeschlossen sind und dazu dienen, ein akustisches Signal zu erzeugen (Sektion 4) als Reaktion auf das vom Alarmsignalgenerator erzeugte Alarmsignal (Sektion 3).

10. System gemäß Anspruch 1, in welchem das Fahrzeug mit Bremsen ausgestattet ist (Sektion 1), die in der Lage sind, die Geschwindigkeit des Fahrzeugs zu vermindern, wobei das besagte System auch Bremsenbetätigungsmittel (Sektion 3) umfasst, die in der Lage sind, die Fahrzeugbremsen als Reaktion auf das von den Aufprallsensoren (Sektion 1) erzeugte Alarmsignal zu betätigen.

11. System gemäß Anspruch 1, in welchem jedes entsprechende Fahrzeug mit Aufblend- und Abblendscheinwerfern (Sektion 1) ausgestattet ist und darüber hinaus folgendes umfasst:
Mittel zur Erfassung des Lichts (Sektion 3), die dazu dienen, das von den Aufblendscheinwerfern des ankommenden Fahrzeugs ausgestrahlte Licht abzugreifen und durch Erzeugung von Lichterfassungssignalen eines eintreffenden Fahrzeugs zu reagieren;
Mittel zur Verminderung des von den Aufblendscheinwerfern ausgestrahlten Lichts (Sektion 3), die dazu dienen, die Lichtintensität der Aufblendscheinwerfer als Reaktion auf die Helligkeitsermittlungssignale zu vermindern, die von den Helligkeitsermittlungsmitteln des eintreffenden Fahrzeugs ausgesandt werden.

12. Das System gemäß Anspruch 1 umfasst außerdem eine manuell bedienbare Vorrichtung zur Erzeugung von akustischen Signalen (Hupe) (Sektion 1), in welcher der Alarmsignalgenerator (Sektion 3) ein codiertes Radiosignal aussendet als Reaktion auf das von der Hupe erzeugte akustische Signal und der Sender des ersten Fahrzeugs (Teil 2 von Sektion 3) ein vom Signalgenerator (Sektion 3) erzeugtes codiertes Radiosignal an den Empfänger (Sektion 4) eines jeden Fahrzeugs sendet, das sich innerhalb eines vorab festgelegten Abstands befindet.

13. System gemäß Anspruch 12, in welchem der Empfänger (Sektion 4) eines jeden Fahrzeugs das von der Hupe des ersten Fahrzeugs (Sektion 1) erzeugte codierte Signal empfängt und welches darüber hinaus auch Mittel umfasst, die durch Erzeugung eines akustischen Gefahrensignals im Innern eines jeden Fahrzeugs zu reagieren in der Lage sind.

## Revendications

1. Un système de détection pour prévenir et éviter la collision, en mesure de mettre en communication un premier véhicule avec une pluralité de véhicules, constitué de:
au moins un capteur d'impact (section 1) installé sur le premier véhicule qui détecte un impact entre le premier véhicule et un objet, étant ledit capteur d'impact (au moins un) en mesure de répondre en émettant un signal d'impact ;
un générateur du signal d'alarme (section 3) installé sur le premier véhicule et connecté au ledit capteur d'impact (au moins un), de manière à produire un signal d'alarme en réponse au signal d'impact émis par le capteur d'impact ; et
un transmetteur (partie 2 de section 3) installé sur le premier véhicule et connecté au générateur du signal d'alarme pour la transmission du signal d'alarme du transmetteur en réponse au ledit signal d'alarme produit par le générateur du signal d'alarme ; étant prévu que ledit signal d'alarme du transmetteur est transmis à une pluralité de véhicules ;
tenu compte que chaque véhicule respectif inclut :
un récepteur (section 4) apte à recevoir le signal d'alarme émis par le transmetteur; et
un capteur de proximité (section 1) connecté au récepteur, apte à déterminer la distance entre le premier véhicule et la pluralité des véhicules.

2. Le système, selon la revendication 1, comprend également un codeur (partie 1 de section 3) connecté entre le générateur du signal d'alarme et le transmetteur, afin de coder le signal d'alarme du transmetteur avant la transmission.

3. Système, selon la revendication 1, où chaque véhicule au sein de la pluralité de véhicules, inclut un respectif générateur de signal et chaque générateur de signal émet un second signal d'alarme (partie 3 de section 3) au cas où la proximité détectée par le capteur de proximité serait inférieure à une valeur déterminée.

4. Dans le système, selon la revendication 3, le capteur de proximité (section 1) comprend également :
des capteurs latéraux (section 1) en mesure de détecter la proximité d'objets en position latérale par rapport au véhicule, et
des capteurs longitudinaux (section 1) en mesure de détecter la proximité d'objets en position longitudinale par rapport au véhicule.

5. Le système, selon la revendication 1, comprend également des moyens d'activation automatique aptes à activer les capteurs d'impact et le capteur de proximité en réponse à des conditions de visibilité limitée dans le voisinage du véhicule.

6. Le système, selon la revendication 1, comprend également des moyens connectés au générateur du signal d'alarme pour l'émission d'un signal visuel (section 5) en réponse au signal d'alarme émis par le générateur du signal d'alarme.

7. Système, selon la revendication 6, prévoyant que les moyens aptes à produire un signal visuel incluent une pluralité de lumières colorées codées, disposées à l'intérieur du véhicule (section 6).

8. Système, selon la revendication 6, prévoyant que les moyens aptes à produire un signal visuel (section 6) incluent une première pluralité de lumières disposées en proximité de la zone périphérique externe du véhicule et une seconde pluralité de lumières disposées en proximité du générateur de signal (section 3), étant prévu que lesdites première et seconde pluralités de lumières s'activent lorsque le capteur de proximité (section 1) détecte une distance déterminée.

9. Le mécanisme, selon la revendication 1, comprend également des moyens connectés au générateur du signal d'alarme aptes à produire un signal audible (section 4) en réponse au signal d'alarme émis par le générateur du signal d'alarme (section 3).

10. Système, selon la revendication 1, prévoyant que le véhicule est doté de freins (section 1) aptes à réduire la vitesse du véhicule, ledit système comprenant également des moyens d'activation des freins (section 3) aptes à activer les freins du véhicule en réponse au signal d'alarme émis par les capteurs d'impact (section 1).

11. Système, selon la revendication 1, prévoyant que chaque véhicule est doté de feux de croisement et de gros feux (section 1) et incluant également:
des moyens de détection de la lumière (section 3) aptes à capter la lumière émise par les gros feux du véhicule en arrivée et à répondre en émettant des signaux de détection de la lumière au véhicule en arrivée ; et
des moyens de réduction de la lumière émise par les gros feux (section 3) aptes à réduire l'intensité de la lumière des gros feux en réponse aux signaux de détection de la luminosité émis par les moyens de détection de la luminosité du véhicule en arrivée.

12. Le système, selon la revendication 1, comprend également un dispositif de signalisation sonore (Klaxon) activé manuellement (section 1), dans lequel le générateur du signal d'alarme (section 3) émet un signal radio codé en réponse au signal sonore produit par le dispositif manuel de signalisation sonore et le transmetteur du premier véhicule (partie 2 de section 3) transmet le signal radio codé émis par le générateur de signal (section 3) au récepteur (section 4) de chaque véhicule se trouvant à une distance déterminée.

13. Système, selon la revendication 12, prévoyant que le récepteur (section 4) de chaque véhicule reçoit le signal codé émis par le dispositif manuel de signalisation sonore (Klaxon) du premier véhicule (section 1) et comprenant également des moyens aptes à répondre en émettant un signal sonore de danger à l'intérieur de chaque véhicule.
